# EUROPEAN PATENT SPECIFICATION

(11) **EP 4 046 907 B1**
(45) Date of publication and mention of the grant of the patent: **09.10.2024**
(21) Application number: 21315024.6
(22) Date of filing: 23.02.2021
(51) Int. Cl.: B64C 11/38, F01D 7/02

(54) **BLADE PITCH CONTROL**
SCHAUFELWINKELVERSTELLUNGSSTEUERUNG
COMMANDE DE PAS DE PALE

(43) Date of publication of application: 24.08.2022
(73) Proprietor: Ratier-Figeac SAS, 46101 Figeac Cedex (FR)
(72) Inventor: Marger, Thibaut, 46100 Beduer (FR); Bouloc, Romain, 46100 Saint Félix (FR)
(74) Representative: Dehns

(56) References cited:
- EP-A1- 3 239 041
- EP-A1- 3 403 923
- EP-A1- 3 431 390
- EP-A1- 3 594 109
- EP-A1- 3 712 058
- WO-A1-99/56912
- GB-A- 585 001
- US-A1- 2019 092 453

## Description

### TECHNICAL FIELD

The present disclosure relates to controlling the pitch of blades of a rotary body e.g. a propeller.

### BACKGROUND

Rotary bodies such as propellers e.g. on aircraft or other propeller-driven vehicles have a plurality of blades mounted around a rotating hub. Variable pitch propellers are known whereby the blades of the propeller can be adjusted to different angles relative to the flow of air over them. The angle of the blades can thus be adjusted to optimise engine performance for given flight conditions or ground operations. For example, during flight, the angle of the blades may be 'coarse, whereas for taxiing, the blades may be adjusted to a 'fine angle or pitch.

In more recent applications, the blade pitch is controlled by a pitch control unit which typically includes an electrohydraulic valve (EHSV) assembly. The EHSV receives pressurised fluid and controls the flow of fluid to an actuator that hydraulically adjust the blade pitch based on control commands. Depending on the state of the EHSV, the flow of hydraulic fluid is controlled into and out of the actuator to move the actuator piston in the required direction and by the required amount to set the angle of the blades.

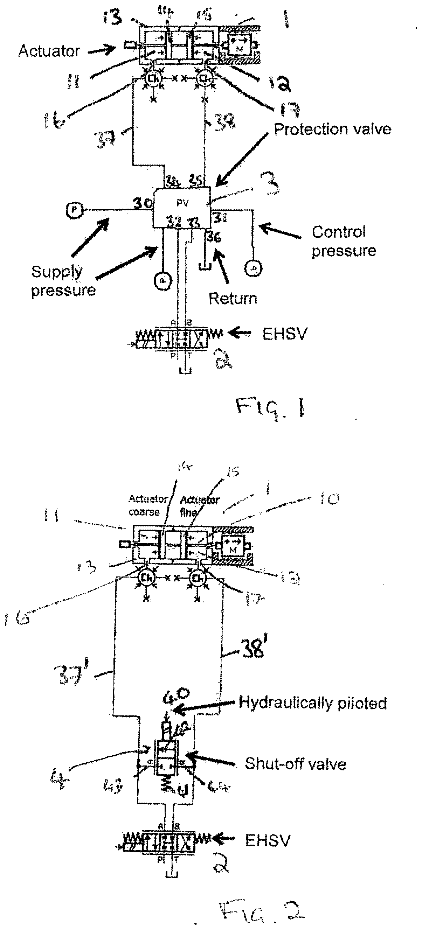

Some control units are also provided with a protective valve to switch the blades to a 'feathering' state e.g. when the propeller engine or the hydraulic system fails. In the case of such an event, following the triggering of the protective valve the blades are naturally driven to the feathered state i.e. they are rotated to lie essentially parallel to the airflow to stop rotation of the propeller and to reduce drag. A conventional protective valve is located between the EHSV and the actuator (as shown in Fig. 1 and described further below). In a normal operating mode, the protective valve is configured such that there is full fluid communication between the EHSV and the actuator on the coarse and fine pressure lines - i.e. for the fluid EHSV and both actuator chambers. The actuator, and thus the blade pitch, is therefore directly controlled by the EHSV. In a protected operating mode e.g. in the event of an overspeed condition or engine failure, the protection valve operates such that the actuator coarse line is connected to the supply pressure and the fine line is connected to the return line of the pressure system such as to cause the actuator to move to the safe, neutral, feather position. Protection valves are typically hydraulically piloted responsive to a variable input pressure. The protection valve can be a simple on/off valve or can be a proportional valve. A blade pitch control assembly is disclosed in EP 3 431 390.

Known protective valves, however, are complex and bulky and add to the overall size and weight of the pitch control assembly. They require many hydraulic ports (as seen in Fig. 1) for piloting and control. Such valves have a high envelope, are heavy and expensive, particularly for proportional protection valves.

There is, therefore, a need for a simpler, smaller, lighter and less expensive protection assembly whilst maintaining reliability and responsiveness.

### SUMMARY

According to one aspect of the present disclosure, there is provided a blade pitch control assembly as defined by claim 1.

The trigger may be a pilot command or may be responsive to an event or condition such as a failure of the primary pitch actuator, e.g. being jammed in a propeller overspeed state, or a low pitch state, or a need for auto-feather protection.

According to another aspect, there is provided a method of controlling the pitch control of one or more blades, as defined by claim 13.

Optionally, the hydraulic protection valve is configured to be driven between a normal mode position in which it blocks fluid flow between the coarse and fine fluid lines via the hydraulic protection valve, such that fluid flows directly between the primary pitch control valve and the actuator, and a protected mode position in which it permits the flow of fluid directly between the coarse and fine fluid lines via the hydraulic protection valve, so as to drive the actuator to feather due to the coarse chamber area being greater than the fine chamber area and/or due to external counterweight forces such as blade counterweights as known in the art, biasing the actuator to a feather position.

The hydraulic protection valve may include a piloting mechanism such as a hydraulic system or some other biasing means and a drive means e.g. a solenoid or some other drive to operate the hydraulic protection valve.

The primary pitch control valve is an electrohydraulic valve, EHSV. The EHSV is configured to ensure some leakage from the EHSV to the actuator even when the hydraulic protection valve is activated.

### BRIEF DESCRIPTION OF THE DRAWINGS

An example of a system of the disclosure will now be described in more detail, by way of example only, with reference to the drawings.

### BRIEF DESCRIPTION OF THE DRAWINGS

An example of a system of the disclosure will now be described in more detail, by way of example only, with reference to the drawings.
Figure 1 is a schematic view of a conventional blade pitch control assembly.
Figure 2 is a schematic view of a blade pitch control assembly according to the disclosure.

### DETAILED DESCRIPTION

Referring first to Fig. 1, a conventional system for controlling blade pitch will now be briefly described.

The pitch of the blades (not shown) is adjusted by means of an actuator 1 having a moveable member such as a piston 10 which is connected to the blades. The actuator comprises two chambers - a coarse chamber 11 and a fine chamber 12 defined by the actuator housing 13 and piston heads 14, 15. The actuator housing 13 has a coarse port 16 to the coarse chamber 11, and a fine port 17 to the fine chamber 12. When pressurised fluid is provided to the coarse chamber 11, the higher pressure in that chamber pushes the piston head further into the fine chamber, forcing fluid out of the fine chamber and causing corresponding movement of the piston 10 and, thus, the blade into the coarse position. Conversely, when pressurised fluid is provided to the fine chamber 12, the higher pressure in that chamber pushes the piston head further into the coarse chamber, forcing fluid out of the coarse chamber and causing corresponding movement of the piston 10 and, thus, the blade into the fine position. The pressurised fluid is provided from a pressure supply (not shown) via the EHSV 2.

The EHSV is controlled by a command from the electronic control unit, in a manner known in the art, to move between different mode positions depending on the desired pitch of the blade. In one position, flow channels are established such that pressurised fluid from the supply flows through the EHSV to the coarse chamber and fluid flows from the fine chamber to the return line. In another position, the flow will be in the opposite direction. This known manner of operation will not be described in more detail.

To ensure safe operation, with the blades being brought to a feathering position, a conventional blade pitch control system includes a protection valve 3 located in the flow paths between the EHSV 2 and the actuator 1. The protection valve 3 has eight ports; a supply port 30 for supply pressure to pilot the protection valve 3 and a control port 31 for piloting the protection valve, two ports 32,33 for the two fluid paths from the EHSV, two ports 34, 35 for fluid flow to the coarse and fine ports of the actuator, and a return port 36.

The protection valve is controlled, by a control pressure at port 31 to take up a normal mode position or a protected mode position, as required. In normal mode, the fluid flow channels are open to allow direct fluid communication from the EHSV to the actuator, thus controlling the actuator by the position of the EHSV set according to the command from the ECU.

In the event of an overspeed condition or a system or engine failure, the protection valve transitions to the protected mode in which the actuator coarse line 37 is connected directly to supply pressure and the actuator fine line 38 is connected to return causing the actuator to drive the blades to the safe feather position - i.e. the actuator is then not driven by the EHSV.

As mentioned above, the aim of the present disclosure is to replace the heavy, complex, large and expensive protection valve with a smaller, lighter and simpler protection mechanism.

The system of this disclosure will be described, by way of example only, with reference to Fig. 2. The components and general operation of the actuator and EHSV are the same as for the conventional systems and for these parts the same reference numerals are used as for Fig. 1.

In place of the protection valve described above, the assembly of the present disclosure utilises a simple hydraulic protection system including a hydraulic protection valve, e.g. a shut-off valve 4 positioned across the fluid flow lines between the EHSV and the actuator.

The shut-off valve is located, as shown, between the coarse line 37' and the fine line 38'. In the example shown, the shutoff valve 4 is hydraulically piloted 40 between normal mode and protected mode positions. This is just one example, and the shut-off valve could be driven in other ways e.g. electrically, mechanically, hydraulically or a combination thereof.

The operation of a shut-off valve according to the disclosure will now be described.

In normal operation, the shut-off valve is driven to be in the position shown in Fig. 2. In this example, the shut-off valve 4 is biased to this position acting against the hydraulic pilot 40. The valve 4 may be biased by a hydraulic system 41 in a way similar to the way in which the conventional valve is positioned, or by means of another biasing means e.g. a spring. In this position, the shut-off valve 4 does not allow any fluid flow between the coarse line 37' and the fine line 38'. As a consequence, the actuator system operates as if the shut-off valve 4 were not there and there is a direct fluid flow from the EHSV and the actuator along the coarse and fine lines.

In the event that the blades need to be brought to the feathering position, as described above, the shut-off valve is driven to the protected mode position. In the example shown in fig. 2, this would involve the hydraulic pilot 40 applying pressure to the valve that exceeds the force of the spring 41 such that the shut-off valve channel 42 aligns with flow paths 43,44 fluidly connected, respectively, to the coarse and fine lines 37', 38' between the EHSV and the actuator. This creates a closed fluid path from the actuator coarse chamber to the actuator fine chamber thus bypassing the EHSV 2 and the actuator will move to the feather position. The area of the coarse chamber is slightly larger than that of the fine chamber. When the shut-off valve is enabled, the pressure in the two chambers is equalised. Due to the difference in area, and assisted by external loads e.g. counterweights, e.g. blade counterweights, the actuator will tend towards the feather position.

The shut-off valve will be enabled to operate in the protected mode when triggered by failure of the EHSV. If, for example, the EHSV is jammed in a centred position, pitch control via the EHSV is no longer possible. In this case, propeller overspeed or propeller low pitch protection will be triggered and the shut-off valve will be enabled and the coarse and fine chamber will be connected to each other via the shut-off valve. Due to an external load or counterweight that biases the actuator towards the feather position, and due to the area of the coarse chamber being greater than that of the fine chamber, the actuator will move towards feather. Full movement to the feather position will, in fact, only be possible since some fluid is allowed to flow to the actuator from the EHSV regardless of its position, and when the shut-off valve is activated, so as to compensate for the change of total fluid volume.

If the EHSV becomes jammed in the position to drive the actuator towards feather, no triggering action is actually needed by the shut-off valve, but it will still be enabled so that the EHSV is bypassed.

In the event that the EHSV is jammed in the actuator low pitch position, again, the shut-off valve will be enabled and, again, due to the external forces and the larger coarse chamber area, the actuator will move towards feather.

The shut-off valve may be fully hydraulically driven. The areas of the left and right sides of the valve may be slightly different. For example, assume that the left (lower) area is smaller than the other side and is always at supply pressure. The right side (top in the drawings) is piloted by a drive means e.g. a solenoid (not shown). In normal mode, the supply pressure pushes the shut-off valve to the off position. In protected mode, return pressure is applied to the other side, acting against the supply pressure, to move the valve to the activated position.

Whilst the example shows a simple on/off shut-off valve 4, the protection valve could also be designed as a proportional valve (not shown) varied.e. that the degree of opening/closing of the protection valve can be proportionally controlled. This allows a difference in pressure between the actuator chambers to be controlled, such that the speed at which the actuator moves toward feather can be controlled.

In another example, not shown, slots can underlap on the EHSV in its centre position so as to ensure a minimum flow rate whatever the EHSV position. In the event of activation of the shut-off valve 4, this minimum flow rate will ensure avoidance of cavitation in the actuator chamber due to piston displacement. Here, the fine chamber volume is decreasing and the coarse chamber volume is increasing. If the EHSV is in its centered position, and assuming no leakage, no flow rate can be added or removed from the actuator. Due to the difference in areas of the chambers, the global pressure in the actuator is decreasing with the motion of the rod. At a certain displacement value, pressure is low and the blade will continue to move towards feather. Additional hydraulic fluid (oil) is required to avoid a negative relative pressure and therefore some leakage is needed when the EHSV is in a centered position.

The EHSV should be designed to guarantee a minimal pressure inside the actuator chambers in the case of shut-off valve activation. This pressure ensures a hydraulic load towards feather. Consequently, the actuator is driven toward feather by external and hydraulic loads.

The shut-off valve of this disclosure is much simpler than the conventional protection valve. It only requires four ports for, respectively, the piloting/control pressure, supply pressure, for the line to the fine chamber and for the line to the coarse chamber. The assembly is smaller, lighter and less expensive and complex compared to the known protection valves. Auto-feather and emergency feathering can be commanded by activating both the shut-off valve and the EHSV to feather. The proper operation of the shut-off valve can be easily tested e.g. before and/or after each flight of an aircraft, while the aircraft is on the ground.

## Claims

1. A blade pitch control assembly comprising a pitch control actuator (1) having a coarse actuator chamber (11) having a coarse chamber area and a fine actuator chamber (12) having a fine chamber area, where the coarse chamber area is larger than the fine chamber area, and a primary pitch control valve (2) configured to control the flow of pressurised fluid to the coarse actuator chamber and the fine actuator chamber, respectively via a coarse fluid line and a fine fluid line; the assembly further comprising a hydraulic protection system located between the actuator and the primary pitch control valve, configured to bypass the primary pitch control valve in response to a trigger; wherein the hydraulic protection system comprises a hydraulic protection system valve (4) located between the coarse fluid line and the fine fluid line wherein activation of the hydraulic protection system valve fluidly connects the coarse fluid line and the fine fluid line so as to balance fluid pressure between the coarse chamber and the fine chamber; wherein the primary pitch control valve is an electrohydraulic valve, EHSV, **characterized in that** the EHSV is configured to ensure some leakage from the EHSV to the actuator when the hydraulic protection system valve is activated, regardless of the position of the EHSV.

2. The blade pitch control assembly of claim 1, wherein the trigger is a pilot command or a failure of the primary pitch control valve.

3. The blade pitch control assembly as claimed in claim 1 or 2, wherein the hydraulic protection system valve is configured to be driven between a normal mode position in which it blocks fluid flow between the coarse and fine fluid lines via the hydraulic protection system valve, such that fluid flows directly between the primary pitch control valve and the actuator, and a protected mode position in which it permits the flow of fluid directly between the coarse and fine fluid lines via the hydraulic protection valve, so as to drive the actuator to feather due to the coarse chamber area being greater than the fine chamber area and/or due to external counterweight forces biasing the actuator to feather.

4. The blade pitch control assembly as claimed in any preceding claim, wherein the hydraulic protection system includes a piloting mechanism to operate the hydraulic protection system valve.

5. The blade pitch control assembly as claimed in claim 4, wherein the piloting mechanism comprises a hydraulic load to bias the hydraulic protection system valve in a first position and a drive means to force the hydraulic protection system valve to a second position.

6. The blade pitch control assembly as claimed in claim 4. wherein the piloting mechanism comprises a spring to bias the hydraulic protection system valve in a first position and a drive means to force the hydraulic protection system valve to a second position.

7. The blade pitch control assembly as claimed in claim 5 or 6, wherein the drive means is a hydraulic drive means.

8. The blade pitch control assembly as claimed in claim 5 or 6, wherein the drive means is an electrical drive means.

9. The blade pitch control assembly as claimed in claim 5 or 6, wherein the drive means is a mechanical drive means.

10. The blade pitch control assembly of any preceding claim, wherein the hydraulic protection system valve is configured to ensure a small pressure difference between the coarse chamber and the fine chamber if the EHSV is jammed in a low pitch position.

11. The blade pitch control assembly of any of claims 1 to 10, wherein the hydraulic protection system valve is configured to be proportionally driven such that a pressure difference is created between the coarse chamber and the fine chamber if the EHSV is jammed in a low pitch position.

12. An aircraft propeller assembly comprising a plurality of blades mounted on a hub and a blade pitch control assembly as claimed in any preceding claim, arranged to vary the pitch of the blades, wherein activation of the hydraulic protection system valve fluidly connects the coarse fluid line and the fine fluid line so as to balance fluid pressure between the coarse chamber and the fine chamber to drive the blades to a feather position.

13. A method of controlling the pitch control of one or more blades using a blade pitch control assembly of any of claims 1 to 11, the method comprising controlling flow of hydraulic fluid to the pitch control actuator (1) via the primary pitch control valve (2), and, in the event of the trigger event, activating the hydraulic system protection valve to provide a fluid flow path between the actuator fine (12) and coarse (11) chambers bypassing the primary control valve.

## Patentansprüche

1. Schaufelwinkelverstellungssteuerung-Anordnung, umfassend ein Anstellwinkelsteuerstellglied (1) mit einer Grobstellgliedkammer (11) mit einem Grobkammerbereich und einer Feinstellgliedkammer (12) mit einem Feinkammerbereich,
wobei der Grobkammerbereich größer als der Feinkammerbereich ist, und ein primäres Anstellwinkelsteuerventil (2), das konfiguriert ist, um den Strom von Druckfluid zu der Grobstellgliedkammer bzw. der Feinstellgliedkammer jeweils über eine Grobfluidleitung und eine Feinfluidleitung zu steuern; wobei die Anordnung ferner ein hydraulisches Schutzsystem umfasst, das zwischen dem Stellglied und dem primären Anstellwinkelsteuerventil angeordnet ist und konfiguriert ist, um das primäre Anstellwinkelsteuerventil als Reaktion auf einen Auslöser zu umgehen;
wobei das hydraulische Schutzsystem ein hydraulisches Schutzsystemventil (4) umfasst, das sich zwischen der Grobfluidleitung und der Feinfluidleitung befindet,
wobei durch Aktivierung des hydraulischen Schutzsystemventils die Grobfluidleitung und die Feinfluidleitung fluidisch verbunden werden, um den Fluiddruck zwischen der Grobkammer und der Feinkammer auszugleichen; wobei
das primäre Anstellwinkelsteuerventil ein elektrohydraulisches Ventil (EHSV) ist, **dadurch gekennzeichnet, dass**
das EHSV so konfiguriert ist, dass eine gewisse Leckage von dem EHSV zu dem Stellglied unabhängig von der Position des EHSV gewährleistet ist, wenn das hydraulische Schutzsystemventil aktiviert wird.

2. Schaufelwinkelverstellungssteuerung-Anordnung nach Anspruch 1, wobei der Auslöser ein Pilotbefehl oder ein Ausfall des primären Anstellwinkelsteuerventils ist.

3. Schaufelwinkelverstellungssteuerung-Anordnung nach Anspruch 1 oder 2, wobei das hydraulische Schutzsystemventil konfiguriert ist, zwischen einer Normalbetriebsposition, in der es den Fluidstrom zwischen den Grob- und Feinfluidleitungen über das hydraulische Schutzsystemventil blockiert, sodass Fluid direkt zwischen dem primären Anstellwinkelsteuerventil und dem Stellglied strömt, und einer Schutzbetriebsposition angetrieben zu werden, in der es den Fluidstrom direkt zwischen den Grob- und Feinfluidleitungen über das hydraulische Schutzventil zulässt, um das Stellglied zum Anstellen anzutreiben, da der Grobkammerbereich größer ist als der Feinkammerbereich und/oder da externe Gegengewichtskräfte das Stellglied zum Anstellen vorspannen.

4. Schaufelwinkelverstellungssteuerung-Anordnung nach einem der vorhergehenden Ansprüche, wobei das hydraulische Schutzsystem einen Pilotiermechanismus zum Betreiben des hydraulischen Schutzsystemventils beinhaltet.

5. Schaufelwinkelverstellungssteuerung-Anordnung nach Anspruch 4, wobei der Pilotiermechanismus eine hydraulische Last, um das hydraulische Schutzsystemventil in eine erste Position vorzuspannen, und ein Antriebsmittel, um das hydraulische Schutzsystemventil in eine zweite Position zu zwingen, umfasst.

6. Schaufelwinkelverstellungssteuerung-Anordnung nach Anspruch 4, wobei der Pilotiermechanismus eine Feder, um das hydraulische Schutzsystemventil in eine erste Position vorzuspannen, und ein Antriebsmittel, um das hydraulische Schutzsystemventil in eine zweite Position zu zwingen, umfasst.

7. Schaufelwinkelverstellungssteuerung-Anordnung nach Anspruch 5 oder 6, wobei es sich bei dem Antriebsmittel um ein hydraulisches Antriebsmittel handelt.

8. Schaufelwinkelverstellungssteuerung-Anordnung nach Anspruch 5 oder 6, wobei es sich bei dem Antriebsmittel um ein elektrisches Antriebsmittel handelt.

9. Schaufelwinkelverstellungssteuerung-Anordnung nach Anspruch 5 oder 6, wobei es sich bei dem Antriebsmittel um ein mechanisches Antriebsmittel handelt.

10. Schaufelwinkelverstellungssteuerung-Anordnung nach einem der vorhergehenden Ansprüche, wobei das hydraulische Schutzsystemventil konfiguriert ist, um einen kleinen Druckunterschied zwischen der Grobkammer und der Feinkammer zu gewährleisten, wenn das EHSV in einer niedrigen Anstellwinkelposition blockiert ist.

11. Schaufelwinkelverstellungssteuerung-Anordnung nach einem der Ansprüche 1 bis 10, wobei das hydraulische Schutzsystemventil konfiguriert ist, um proportional angetrieben zu werden, sodass zwischen der Grobkammer und der Feinkammer ein Druckunterschied entsteht, wenn das EHSV in einer niedrigen Anstellwinkelposition blockiert ist.

12. Flugzeugpropelleranordnung, umfassend eine Vielzahl von Schaufeln, die an einer Nabe montiert ist, und eine Schaufelwinkelverstellungssteuerung-Anordnung nach einem der vorhergehenden Ansprüche, die zum Variieren des Anstellwinkels der Schaufeln angeordnet ist, wobei durch die Aktivierung des hydraulischen Schutzsystemventils die Grobfluidleitung und die Feinfluidleitung fluidisch verbunden werden, um den Fluiddruck zwischen der Grobkammer und der Feinkammer auszugleichen und die Schaufeln in eine Anstellposition anzutreiben.

13. Verfahren zum Steuern der Anstellwinkelsteuerung eines oder mehrerer Schaufeln unter Verwendung einer Schaufelwinkelverstellungssteuerung-Anordnung nach einem der Ansprüche 1 bis 11, wobei das Verfahren das Steuern des Stromes von Hydraulikfluid zu dem Anstellwinkelsteuerstellglied (1) über das primäre Anstellwinkelsteuerventil (2) und, im Falle des Auslöseereignisses, das Aktivieren des hydraulischen Schutzsystemventils umfasst, um einen Fluidstrompfad zwischen der Feinkammer (12) und der Grobkammer (11) des Stellglieds unter Umgehung des primären Steuerventils bereitzustellen.

## Revendications

1. Ensemble de commande de pas de pale comprenant un actionneur de commande de pas (1) ayant une chambre d'actionneur grossière (11) ayant une zone de chambre grossière et une chambre d'actionneur
fine (12) ayant une zone de chambre fine, où la zone de chambre grossière est plus grande que la zone de chambre fine, et une vanne de commande de pas primaire (2)
configuré pour commander l'écoulement de fluide sous pression jusqu'à la chambre d'actionneur grossière et la chambre d'actionneur fine, respectivement via une conduite de fluide grossière et une conduite de fluide fine ; l'ensemble comprenant également un système de protection hydraulique situé entre l'actionneur et la vanne de commande de pas primaire, configuré pour contourner la vanne de commande de pas primaire en réponse à un déclencheur ; dans lequel le système de protection hydraulique comprend une vanne de système de protection hydraulique (4) située entre la conduite de fluide grossière et la conduite de fluide fine
dans lequel l'activation de la vanne de système de protection hydraulique connecte fluidiquement la conduite de fluide grossière et la conduite de fluide fine de manière à équilibrer la pression de fluide entre la chambre grossière et la chambre fine ; dans lequel
la vanne de commande de pas primaire est une vanne électrohydraulique, EHSV, **caractérisé en ce que** l'EHSV est configurée pour assurer
certaines fuites de l'EHSV jusqu'à l'actionneur lorsque la vanne de système de protection hydraulique
est activée, quelle que soit la position de l'EHSV.

2. Ensemble de commande de pas de pale selon la revendication 1, dans lequel le déclencheur est une commande pilote ou une défaillance de la vanne de commande de pas primaire.

3. Ensemble de commande de pas de pale selon la revendication 1 ou 2, dans lequel la vanne de système de protection hydraulique est configurée pour être entraînée entre une position de mode normal dans laquelle elle bloque l'écoulement de fluide entre les conduites de fluide grossière et fine via la vanne de système de protection hydraulique, de sorte que du fluide s'écoule directement entre la vanne de commande de pas primaire et l'actionneur, et une position de mode protégé dans laquelle elle permet l'écoulement de fluide directement entre les conduites de fluide grossière et fine via la vanne de protection hydraulique, de manière à entraîner l'actionneur vers la mise en drapeau en raison du fait que la zone de chambre grossière est supérieure à la zone de chambre fine et/ou en raison de forces de contrepoids externes qui poussent l'actionneur vers la mise en drapeau.

4. Ensemble de commande de pas de pale selon une quelconque revendication précédente, dans lequel le système de protection hydraulique comporte un mécanisme de pilotage pour actionner la vanne de système de protection hydraulique.

5. Ensemble de commande de pas de pale selon la revendication 4, dans lequel
le mécanisme de pilotage comprend une charge hydraulique pour solliciter la vanne de système de protection hydraulique dans une première position et un moyen d'entraînement pour forcer la vanne de système de protection hydraulique jusqu'à une seconde position.

6. Ensemble de commande de pas de pale selon la revendication 4, dans lequel
le mécanisme de pilotage comprend un ressort pour solliciter la vanne de système de protection hydraulique dans une première
position et un moyen d'entraînement pour forcer la vanne de système de protection hydraulique jusqu'à une seconde position.

7. Ensemble de commande de pas de pale selon la revendication 5 ou 6, dans lequel le moyen d'entraînement est un moyen d'entraînement hydraulique.

8. Ensemble de commande de pas de pale selon la revendication 5 ou 6, dans lequel le moyen d'entraînement est un moyen d'entraînement électrique.

9. Ensemble de commande de pas de pale selon la revendication 5 ou 6, dans lequel le moyen d'entraînement est un moyen d'entraînement mécanique.

10. Ensemble de commande de pas de pale selon une quelconque revendication précédente, dans lequel la vanne de système de protection hydraulique est configurée pour assurer une petite différence de pression entre la chambre grossière et la chambre fine si l'EHSV est bloquée dans une position de pas faible.

11. Ensemble de commande de pas de pale selon l'une quelconque des revendications 1 à 10, dans lequel la vanne de système de protection hydraulique est configurée pour être entraînée proportionnellement de sorte
qu'une différence de pression est créée entre la chambre grossière et la chambre fine si l'EHSV est bloquée dans une position de pas faible.

12. Ensemble d'hélice d'aéronef comprenant une pluralité de pales montées sur un moyeu et un ensemble de commande de pas de pale selon une quelconque revendication précédente, agencé pour faire varier le pas des pales, dans lequel l'activation de la vanne de système de protection hydraulique connecte fluidiquement la conduite de fluide grossière et la conduite de fluide fine de manière à équilibrer la pression de fluide entre la chambre grossière et la chambre fine pour entraîner les pales jusqu'à une position en drapeau.

13. Procédé de commande de la commande de pas d'une ou de plusieurs pales à l'aide d'un ensemble de commande de pas de pale selon l'une quelconque des revendications 1 à 11, le procédé comprenant la commande d'écoulement de fluide hydraulique jusqu'à l'actionneur de commande de pas (1) via la vanne de commande de pas primaire (2), et, en cas d'événement déclencheur, l'activation de la vanne de protection de système hydraulique pour fournir un trajet d'écoulement de fluide entre les chambres fine (12) et grossière (11) d'actionneur en contournant la vanne de commande primaire.
